# EUROPÄISCHE PATENTSCHRIFT

(11) **EP 0 931 446 B1**
(45) Veröffentlichungstag und Bekanntmachung des Hinweises auf die Patenterteilung: **12.02.2003**
(21) Anmeldenummer: 98122652.5
(22) Anmeldetag: 28.11.1998
(51) Int. Cl.: A01D 41/12

(54) **Messvorrichtung an einer fahrbaren Erntemaschine**
Measuring device in a harvesting machine
Dispositif de mesure dans une machine de récolte

(30) Priorität: 16.01.1998 DE 19801335
(43) Veröffentlichungstag der Anmeldung: 28.07.1999
(73) Patentinhaber: CLAAS Selbstfahrende Erntemaschinen GmbH, 33428 Harsewinkel (DE)
(72) Erfinder: Diekhans, Norbert Dr., 33335 Gütersloh (DE)

(56) Entgegenhaltungen:
- EP-A- 0 501 099
- EP-A- 0 843 959
- DE-A- 1 917 670
- DE-A- 19 522 441
- DE-A- 19 618 042
- FR-A- 2 683 425

## Beschreibung

Die Erfindung bezieht sich auf eine Meßvorrichtung an einer fahrbaren Erntemaschine zur Bestimmung einer erntegut- und/oder förderspezifischen Parameters mit einem Vorsatzgerät zur Aufnahme des Erntegutes und mindestens einem Bearbeitungsgerät zur Bearbeitung des Erntegutes. Insbesondere bezieht die Erfindung sich auf eine Meßvorrichtung an einem Feldhäcksler für die Ernte von Silomais, Anwelkgrassilage oder Ganzpflanzensilage.

In der DE 32 32 746 C2 ist bereits eine fahrbare Erntemaschine mit einer Vorrichtung zur Feuchtemessung im Wege des Erntegutes durch die Maschine beschrieben. Die Feuchtemessung ist deshalb so wichtig, da der Feuchteanteil des Erntegutes in der Silage einen entscheidenden Einfluß auf die spätere Silagequalität hat. Bei zu feuchtem Erntegut/Silage kommt es beispielsweise in nachteiliger Weise zur Bildung von Buttersäurebakterien, die die Silagequalität beeinträchtigen. Diese nachteiligen Folgeerscheinungen eines zu feuchten Erntegutes können jedoch durch die Zugabe/Beimischung von Zusatzstoffen bei der Erntegutbergung zu einem großen Teil kompensiert werden, wobei die benötigte Menge an Zusatzstoffen abhängig von der Feuchte des Erntegutes ist, die auch innerhalb eines Schlages durchaus unterschiedlich sein kann. Um die Zugabe der Zusatzstoffe richtig dosieren zu können, ist daher eine "online" Feuchtemessung mittels einer entsprechenden Meßvorrichtung direkt auf dem Weg des Erntegutes durch die Erntemaschine - wie in der DE 32 32 746 C2 beschrieben - erforderlich.

Nun hat es sich bei Erprobungsversuchen in der Praxis herausgestellt, daß der Anbringungsort und die Einbauposition der Meßvorrichtung innerhalb des Weges des Erntegutes durch die Erntemaschine problematisch ist und zwar sowohl hinsichtlich eines zuverlässigen Meßergebnisses als auch hinsichtlich von Verschleiß und Verschmutzung der Meßvorrichtung.

Versuche mit einer in der verstellbaren Auswurfklappe eines Feldhäckslers eingebauten Meßvorrichtung (Feuchtesensor, der die elektrische Leitfähigkeit des Erntegutes mißt) haben ergeben, daß die Meßergebnisse bei tatsächlich gleich feuchtem Erntegut je nach Verstellwinkel der Auswurfklappe unterschiedlich waren. Der Grund hierfür liegt darin, daß der Winkel zwischen Erntegutstrom und Meßvorrichtung und der damit in Verbindung stehende Anpreßdruck des Erntegutes auf den Feuchtesensor je nach Verstellwinkel der Auswurfklappe ein anderer ist und bei diesem Sensor der Anpreßdruck als Störgröße einen starken Einfluß auf den gemessenen Feuchtewert hat.
Um ein optimales Befüllen des mit dem Feldhäcksler parallelfahrenden Wagens zu ermöglichen, ist jedoch ein sehr häufiges Verstellen der Auswurfklappe notwendig, wodurch eine unzuverlässige Feuchtemessung mit starken Meßwertschwankungen unausweichlich ist.

Hinzu kommt, daß die in der Auswurfklappe eingebaute Meßvorrichtung einem starken abrasiven Verschleiß durch das anprallende, von dem von einem Auswurfgebläse bis zu 70 m/s stark beschleunigte Erntegut ausgesetzt ist, wodurch die Haltbarkeit der Meßvorrichtung erheblich reduziert wird. Der abrasive Verschleiß wird noch dadurch verstärkt, daß dem Erntegut unter Umständen Erde, kleine Holzstücke oder Steine anhaftet, was aber nicht ausgeschlossen werden kann.

Ein sehr hoher Verschleiß und sogar die Gefahr von Beschädigungen ist auch dann gegeben, wenn man die Meßvorrichtung vor der Bearbeitungseinheit des Feldhäckslers (Messertrommel/Häckselaggregat) einbaut. Wählt man diesen Einbauort, so ist die Meßgenauigkeit beispielsweise bei einer Feuchtemessung geringer, da nur die Oberflächenfeuchte des Rohmaterials und nicht die tatsächliche Feuchte des Häckselgutes gemessen wird.

Andererseits zeigten andere Einbauorte - beispielsweise im Auswurfkrümmer -, die zwar einen geringeren abrasiven Verschleiß aufwiesen, das Problem der Verschmutzung und eine schlechte Zugänglichkeit der Meßvorrichtung. Das faserige Erntegut bildet insbesondere bei einem hohen Feuchtegehalt Ablagerungen, wenn an der Meßstelle eine ausreichende Selbstreinigung durch den Emtegutstrom nicht ausreichend stattfindet. Dies kann zu verfälschten oder gar vollständig unbrauchbaren Meßergebnissen führen.

In der DE 32 32 746 C2 werden diese Probleme nicht angesprochen. Es werden lediglich einige prinzipiell mögliche Einbauorte für eine Feuchtemeßvorrichtung an einem Mähdrescher vorgeschlagen. Hinweise für geeignete Einbauorte/Positionen der Meßvorrichtung zur Lösung der obengenannten Probleme finden sich hier nicht.

Aufgabe der Erfindung ist es daher, eine an sich bekannte Meßvorrichtung zur Bestimmung erntegut- und/oder förderspezifischer Parameter so an einer fahrbaren Erntemaschine anzubringen, daß diese zuverlässige Meßergebnisse liefert und außerdem möglichst gut vor Verschleiß und Verschmutzungen geschützt ist.

Diese Aufgabe wird erfindungsgemäß dadurch gelöst, daß die Meßvorrichtung in der Erntemaschine dem mindestens einen Bearbeitungsgerät nachgeordnet und auf dem Erntegutweg zwischen dem Bearbeitungsgerät und dem Bereich angeordnet ist, in welchem der Erntegutstrom auf seine endgültige zur Erntegut abgabe bestimmte Gutstrombreite gebracht worden ist. In diesem Bereich ist der Einfluß von Störgrößen am geringsten. Die Orientierung des Erntegutstroms zur Meßvorrichtung ist dabei immer die gleiche, wodurch eine zuverlässige Meßwerterfassung ohne störende und irritierende Schwankungen gewährleistet ist.

Ferner wird in diesem Bereich der Erntegutstrom nicht oder nur gering von der Meßeinrichtung umgelenkt, so daß ein gleichbleibender geringer Druck auf die Meßeinrichtung ausgeführt wird. Dadurch ist der abrasive Verschleiß an der Meßvorrichtung minimal und die Druckdifferenz bei unterschiedlichen Erntegutdurchsätzen gering.
Der Anpreßdruck ist zwar gering, er ist aber für beispielsweise die Messung der Feucht über die elektrischen Leitfähigkeit immer noch ausreichend. Eine bessere Kontaktierung des Erntegutstromes zur Meßeinrichtung kann durch in den Gutstrom eingreifende Meßelektroden verbessert werden.

Dadurch, daß in diesem Bereich ständig nachströmendes Erntegut über die Meßvorrichtung geleitet wird, findet außerdem eine Reinigung statt, wodurch Verschmutzungen vorgebeugt wird. Auch wenn sich in einer Erntepause Ablagerungen gebildet haben, werden diese nach kurzem Betrieb der Erntemaschine wieder gelöst.

Zur genaueren sicheren Meßwertermittlung ist es durchaus sinnvoll, mehrere gleichartig oder unterschiedliche Meßvorrichtungen in dem beschriebenen Bereich anzubringen. Die Erfindung ist nicht auf Meßvorrichtungen zur Feuchtebestimmung beschränkt. Sie ist allgemein für Meßvorrichtungen zur Bestimmung von Erntegutparametern anwendbar.

Anhand der beigefügten Zeichnungen soll die Erfindung im folgenden näher erläutert werden. Es zeigt:
- Figur1: eine Seitenansicht eines Feldhäckslers,
- Figur 2: eine Seitenansicht des Weges des Erntegutes durch den Feldhäcksler,
- Figur 3: eine Draufsicht auf die Messertrommel/Häckselaggregat und das Auswurfgebläse mit eingezeichneten möglichen Meßstellen,
- Figur 4: die Draufsicht auf einen Feuchtesensor als Meßvorrichtung,
- Figur 5: einen Ausschnitt der Wandung des Auswurfschachtwandung mit darauf montierter Meßvorrichtung sowie daran vorbeibewegtem Erntegut.
- Figur 6: zeigt eine Kontrollklappe im Auswurfschacht mit eingebauter Meßvorrichtung

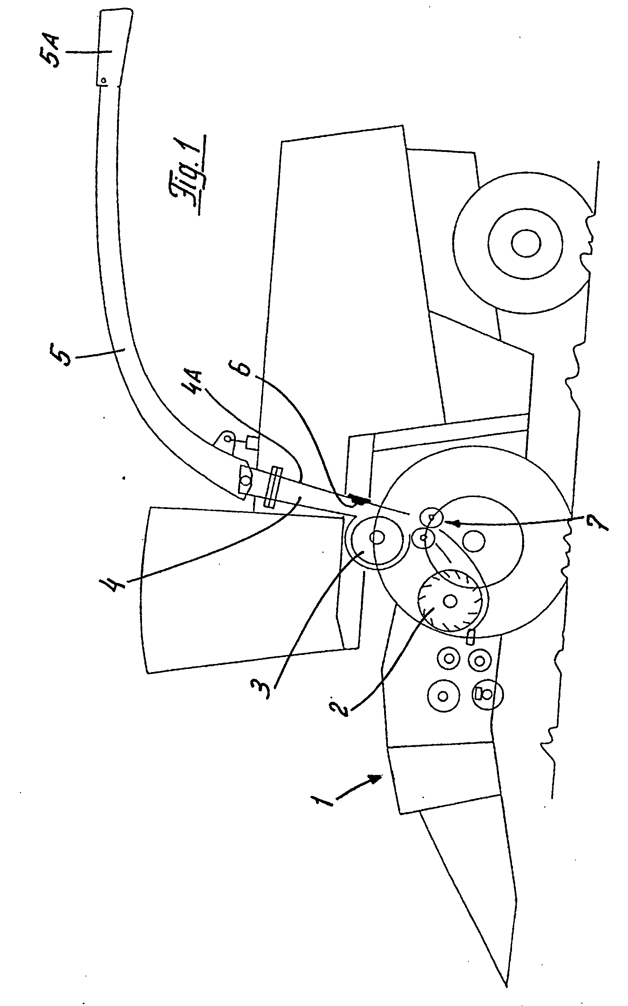

In Figur 1 ist ein Feldhäcksler mit einem Vorsatzgerät 1 - hier ein Maisgebiß-, einer Messertrommel/ Häckselaggregat 2 als Bearbeitungsgerät, einem Auswurfgebläse/ Auswurfbeschleuniger 3 mit Auswurfschacht 4 und dem sich daran anschließenden Auswurfkrümmer 5 mit Auswurfklappe 5A gezeigt. Die Meßvorrichtung 6 befindet sich in einer besonders vorteilhaften Anbauposition direkt nach dem Auswurfgebläse 3. In diesem Bereich wird der relativ dünne Erntegutstrom von der Breite des Auswurfgebläses auf die Breite des Auswurfkrümmers reduziert. Durch die plane Auswurfschachtwandung 4A wird die Gutstromrichtung beibehalten.
Zwischen der Messertrommel 2 und dem Auswurfgebläse 3 befindet sich ein sogenannter Corn-Cracker 7, er dient zum optimalen Aufschluß der Maiskörner.

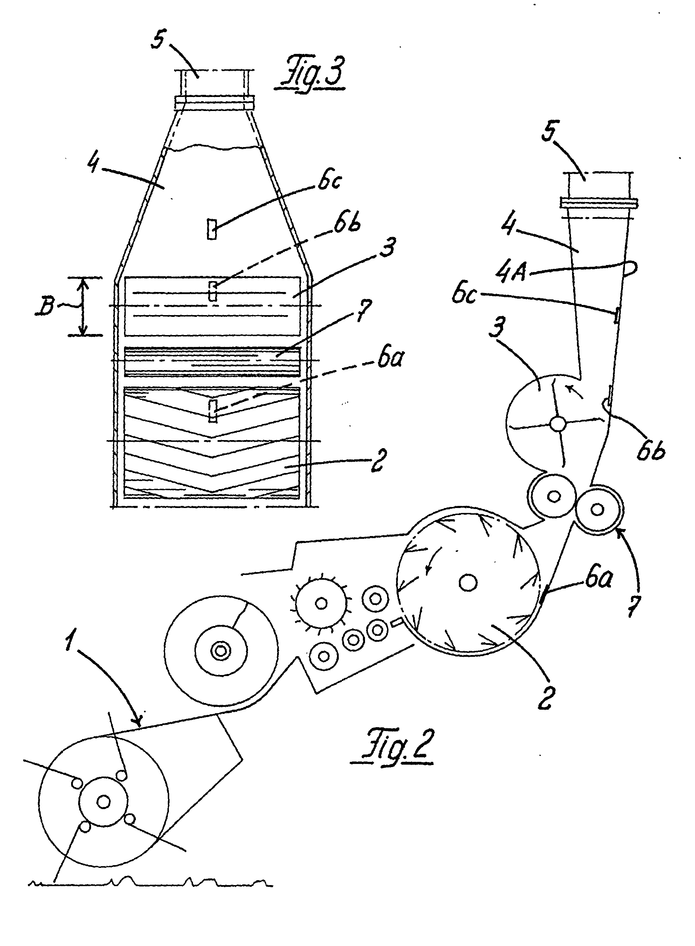

Figur 2 zeigt eine vergrößerte Darstellung des Weges des Erntegutes durch einen Feldhäcksler, hier wird als Vorsatzgerät 1 ein Pickup, welches zur Aufnahme von Anwelkgrassilage dient, gezeigt.
Im Bereich der Erntegutweges zwischen der Häckseltrommel 2 und dem Auswurfkrümmer 5 sind beispielhaft drei mögliche Einbauorte für die Meßvorrichtung 6 eingezeichnet:
a) direkt nach der Häckseltrommel 2 an der Position 6a,
b) direkt nach dem Auswurfgebläse 3 an der Position 6b
   und c) im Abstand - größenordnungsmäßig ein bis zwei Auswurfgebläsedurchmesser B- hinter dem Auswurfgebläse 3 an der Position 6c.

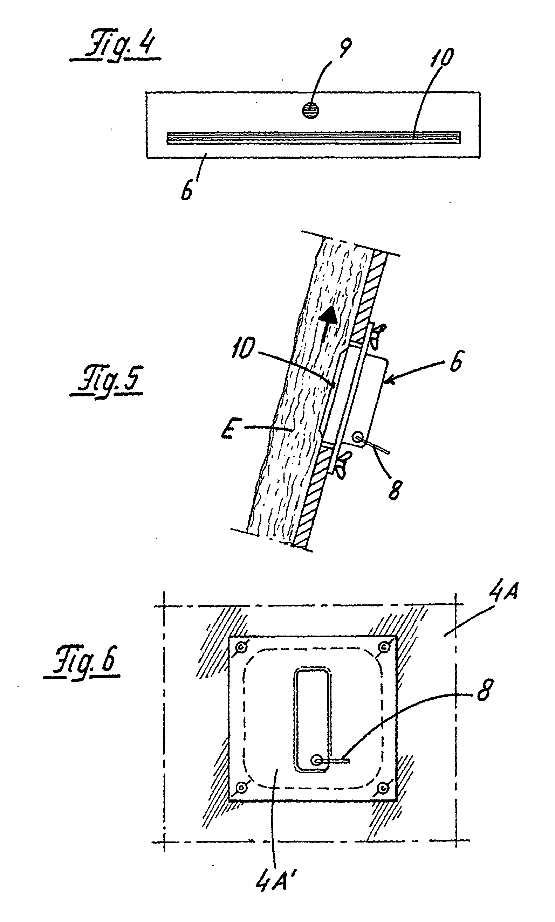

In Figur 3 ist ein Schnitt durch den Erntegutweg in der Erntemaschine quer zur Fahrtrichtung dargestellt. Die bevorzugten möglichen Anbringungsorte 6a, 6b, 6c werden hier nochmals aus einer weiteren Sicht dargestellt. Die Anbringung der Meßvorrichtung 6 in der jeweiligen Schachtmitte ist besonders vorteilhaft, weil bei geringen Erntegutmengen der Gutstrom überwiegend in der Mitte des Schachtes verläuft und somit schon geringe Erntegutströme erfaßt werden können.

Figur 4 zeigt beispielhaft eine aktive Sensorfläche einer Meßvorrichtung 6 zur Feuchtebestimmung mittels Leitfähigkeitsmessung über zwei Elektroden 9, 10.

In Figur 5 ist schematisch dargestellt, wie das Erntegut E erfindungsgemäß, ohne großen Druck auf die Meßvorrichtung 6 auszuüben, an der Meßvorrichtung 6 parallel zu den Elektroden vorbei gefördert wird.

Figur 6 zeigt eine bevorzugte Anbringung der Meßvorrichtung 6 an der Wandung 4A in einer schwenkbaren beziehungsweise abnehmbaren Kontrollklappe 4A'. Diese Kontrollklappe 4A' dient zur Kontrolle der Wurfelemente des Auswurfgebläses 3. Durch diese Anbringung wird in einfacher Weise bei den Sichtkontrollen des Auswurfgebläses 3, auch die Kontrolle der Meßvorrichtung 6 ermöglicht. Ferner besteht so die leichte Zugänglichkeit zur Meßvorrichtung 6 bei einer eventuellen Reparatur Vorrichtung. Die elektrischen Anschlußleitungen 8 können problemlos und sicher in dem gut zugänglichen Raum hinter dem Auswurfschacht 4 verlegt werden.

## Patentansprüche

1. Messvorrichtung (6) an einer fahrbaren Erntemaschine, insbesondere an einem Feldhäcksler, zur Bestimmung eines erntegut- und/oder förderspezifischen Parameters, wobei die Erntemaschine ein Vorsatzgerät (1) zur Aufnahme des Emtegutes und mindestens ein Bearbeitungsgerät (2) zur Bearbeitung des Erntegutes aufweist,
**dadurch gekennzeichnet,**
**dass** mindestens eine Messeinrichtung (6) in der Erntemaschine dem mindestens einen Bearbeitungsgerät (2) nachgeordnet und auf dem Erntegutweg zwischen dem Bearbeitungsgerät (2) und dem Bereich angeordnet ist, in welchem der Erntegutstrom (E) auf seine endgültige zur Erntegutabgabe bestimmte Gutstrombreite gebracht worden ist.

2. Meßvorrichtung (6) an einer selbstfahrenden Erntemaschine nach Anspruch 1,
**dadurch gekennzeichnet,**
**daß** die Meßvorrichtung (6) direkt hinter dem Bearbeitungsgerät (2) angeordnet ist.

3. Meßvorrichtung (6) an einer selbstfahrenden Erntemaschine nach mindestens einem der vorstehenden Ansprüche,
**dadurch gekennzeichnet,**
**daß** die Meßvorrichtung (6) an der Wandung des Auswurfschachtes (4) eingebaut ist.

4. Meßvorrichtung (6) an einer selbstfahrenden Erntemaschine nach mindestens einem der vorstehenden Ansprüche,
**dadurch gekennzeichnet,**
**daß** mindestens eine Meßvorrichtung (6) an der Wandung einer schwenkbaren beziehungsweise abnehmbaren Kontrollklappe (4A') montiert ist.

5. Meßvorrichtung (6) an einer selbstfahrenden Erntemaschine nach mindestens einem der vorstehenden Ansprüche,
**dadurch gekennzeichnet,**
**daß** die Meßvorrichtung (6) in der Mitte des Erntegutstromes angeordnet ist.

6. Meßvorrichtung (6) an einer selbstfahrenden Erntemaschine nach mindestens einem der vorstehenden Ansprüche,
**dadurch gekennzeichnet,**
**daß** die Meßvorrichtung (6) ein Sensor zur Feuchtemessung ist.

7. Meßvorrichtung (6) an einer selbstfahrenden Erntemaschine nach mindestens einem der vorstehenden Ansprüche,
**dadurch gekennzeichnet,**
**daß** die Meßvorrichtung (6) eine Vorrichtung zur Ermittlung des Erntegutdurchsatz ist.

## Claims

1. A measuring apparatus (6) on a mobile harvester, in particular on a forage harvester, for determining a crop material- and/or conveyor-specific parameter, wherein the harvester has a front attachment (1) for picking up the crop material and at least one processing device (2) for processing the crop material, **characterised in that** at least one measuring device (6) is arranged in the harvester downstream of the at least one processing device (2) and is arranged on the crop material path between the processing device (2) and the region in which the crop material flow (E) has been brought to its definitive material flow width which is intended for discharge of the crop material.

2. A measuring apparatus (6) on a self-propelled harvester according to claim 1 **characterised in that** the measuring apparatus (6) is arranged directly behind the processing device (2).

3. A measuring apparatus (6) on a self-propelled harvester according to at least one of the preceding claims **characterised in that** the measuring apparatus (6) is installed at the wall of the discharge shaft (4).

4. A measuring apparatus (6) on a self-propelled harvester according to at least one of the preceding claims **characterised in that** at least one measuring apparatus (6) is mounted to the wall of a pivotable or removable control flap (4A').

5. A measuring apparatus (6) on a self-propelled harvester according to at least one of the preceding claims **characterised in that** the measuring apparatus (6) is arranged in the middle of the crop material flow.

6. A measuring apparatus (6) on a self-propelled harvester according to one of the preceding claims **characterised in that** the measuring apparatus (6) is a sensor for moisture measurement.

7. A measuring apparatus (6) on a self-propelled harvester according to one of the preceding claims **characterised in that** the measuring apparatus (6) is an apparatus for determining the crop material through-put.

## Revendications

1. Dispositif de mesure (6) sur une machine de récolte ou moissonneuse mobile, en particulier sur une ensileuse automotrice, pour déterminer un paramètre spécifique du produit de récolte et/ou des conditions de transport du produit de récolte, la machine de récolte comprenant un outil ou appareil frontal (1) pour prendre le produit de récolte et au moins un appareil de traitement (2) pour traiter le produit de récolte,
**caractérisé par le fait**
**qu'**au moins un dispositif de mesure (6) est disposé dans la machine de récolte à la suite dudit au moins un dispositif de traitement (2) sur le trajet du produit de récolte entre l'appareil de traitement (2) et la zone dans laquelle le flux de produit de récolte (E) a été amené à sa largeur de flux de produit définitive destinée à la décharge du produit de récolte.

2. Dispositif de mesure (6) sur une machine de récolte automotrice suivant la revendication 1,
**caractérisé par le fait**
**que** le dispositif de mesure (6) est disposé directement à la suite du dispositif de traitement (2).

3. Dispositif de mesure (6) sur une machine de récolte automotrice suivant au moins l'une des revendications précédentes,
**caractérisé par le fait**
**que** le dispositif de mesure (6) est monté sur la paroi de la goulotte d'éjection (4).

4. Dispositif de mesure (6) sur une machine de récolte automotrice suivant au moins l'une des revendications précédentes,
**caractérisé par le fait**
**qu'**au moins un dispositif de mesure (6) est monté sur la paroi d'un volet de contrôle (4A') pivotant ou démontable.

5. Dispositif de mesure (6) sur une machine de récolte automotrice suivant au moins l'une des revendications précédentes,
**caractérisé par le fait**
**que** le dispositif de mesure (6) est monté au milieu (de la largeur) du flux de produit de récolte.

6. Dispositif de mesure (6) sur une machine de récolte automotrice suivant au moins l'une des revendications précédentes,
**caractérisé par le fait**
**que** le dispositif de mesure (6) est un détecteur de mesure d'humidité.

7. Dispositif de mesure (6) sur une machine de récolte automotrice suivant au moins l'une des revendications précédentes,
**caractérisé par le fait**
**que** le dispositif de mesure (6) est un dispositif pour déterminer le débit de produit de récolte.
